# EUROPÄISCHE PATENTSCHRIFT

(11) **EP 1 613 418 B1**
(45) Veröffentlichungstag und Bekanntmachung des Hinweises auf die Patenterteilung: **18.10.2006**
(21) Anmeldenummer: 04721462.2
(22) Anmeldetag: 18.03.2004
(51) Int. Cl.: B01D 63/08, C02F 3/12, B01D 65/08, B01D 69/06

(54) **PLATTENFILTRATIONSMODUL**
PLATE FILTRATION MODULE
MODULE DE FILTRAGE A PLAQUES

(30) Priorität: 16.04.2003 DE 10317853
(43) Veröffentlichungstag der Anmeldung: 11.01.2006
(73) Patentinhaber: A3 Abfall-Abwasser-Anlagentechnik GmbH, 45881 Gelsenkirchen (DE)
(72) Erfinder: RICHTER, Steffen, 45655 Recklinghausen (DE); BRÜSS, Ulrich, 48301 Nottuln (DE)
(74) Vertreter: Vomberg, Friedhelm
(86) Internationale Anmeldenummer: PCT/DE2004/000553
(87) Internationale Veröffentlichungsnummer: WO 2004/091755

(56) Entgegenhaltungen:
- WO-A-95/06514
- WO-A-03/059494
- DE-A- 10 151 833
- PATENT ABSTRACTS OF JAPAN Bd. 018, Nr. 588 (C-1271), 10. November 1994 (1994-11-10) -& JP 06 218247 A (KUBOTA CORP), 9. August 1994 (1994-08-09)
- PATENT ABSTRACTS OF JAPAN Bd. 2000, Nr. 01, 31. Januar 2000 (2000-01-31) -& JP 11 285689 A (NITTO DENKO CORP), 19. Oktober 1999 (1999-10-19)
- PATENT ABSTRACTS OF JAPAN Bd. 1997, Nr. 07, 31. Juli 1997 (1997-07-31) -& JP 09 085064 A (HITACHI PLANT ENG & CONSTR CO LTD), 31. März 1997 (1997-03-31)
- PATENT ABSTRACTS OF JAPAN Bd. 1996, Nr. 03, 29. März 1996 (1996-03-29) -& JP 07 299339 A (KUBOTA CORP), 14. November 1995 (1995-11-14)

## Beschreibung

Die Erfindung betrifft ein Modul zur Filtration von flüssigen Medien, insbesondere zur Reinigung von Abwasser mit mehreren jeweils mindestens eine Öffnung zur Entwässerung ihres Innenraumes aufweisende im wesentlichen flachen und flexiblen Filtermembrantaschen, die vertikal, parallel und vorzugsweise in gleichem Abstand zueinander in einem starren zumindest im wesentlichen quaderförmigen Halter so angeordnet sind, dass die zwischen benachbarten Filtermembrantaschen liegenden Zwischenräume intensiv von einer Flüssigkeit durchströmbar sind.

Herkömmliche Filtersysteme zur Abwasserreinigung bestehen aus einer Filtrationseinheit mit einem oben und unten offenen kastenförmigen Gehäuse, in dem mehrfach Membrankassetten angeordnet sind, die vertikal und parallel zueinander beabstandet von benachbarten Membrankassetten angeordnet sind. Die Zwischenräume zwischen den einzelnen Membrankassetten bilden Durchgänge, die durchströmbar sind. Die einzelnen Membrankassetten beinhalten eine flache Filterplatte, deren Oberfläche mit einer Filtrationsmembran bedeckt ist. Unterhalb dieses Kastens mit den Membrankassetten ist ein Gehäuse angeordnet, das eine Einrichtung zur Luftzufuhr beinhaltet, durch die eine Aufwärtsströmung erzeugt wird, mittels derer die Flüssigkeit entlang der Membrankassetten strömt. Jede der Membrankassetten besitzt Abzugsleitungen, die in eine Flüssigkeitssammelleitung münden, in der sich eine Saugpumpe befindet, über die die gefilterte Flüssigkeit abgezogen werden kann. In der EP 0 662 341 B1 wird als Nachteil diese Filtersystems angegeben, dass die verwendeten Filterplatten aus Vollmaterial zur Folge haben, dass nur eine dünne Schicht im Durchgang der durchtretenden Flüssigkeit zwischen der Filtrationsmembrane und der Filterplattenoberfläche gebildet wird, weshalb ein hoher Durchflusswiderstand gegeben ist. Da der transmembrane Druck nicht gleichmäßig auf die gesamte Oberfläche der Filtrationsmembrane der Membrankassette verteilt wird, kommt es zu einer Druckkonzentrierung in der Umgebung der Wanne, die mit der Flüssigkeitssammelleitung verbunden ist, so dass die Filtration in Teilen des Kastens zu einer wachsenden Verschleimung führt. Um dieses Problem zu beheben, wird ein Modul mit Filtrationsmembranen vorgeschlagen, bei dem die Membranstützplatte einer jeden Membrankassette hohl ausgebildet ist, wobei sich die Stützplatte aus einer starren Rahmenstruktur zusammensetzt, die solide Kernstücke und dazwischen liegende Ausnehmungen trägt. In diese Membranstützplatte ist eine Austrittsöffnung angeordnet, über die die gefilterte Flüssigkeit abgezogen werden kann.

Nach einem weiteren Vorschlag gemäß der EP 0 662 341 B 1 soll die Membrankassette eine taschenförmige Filtrationsmembran umfassen, welche die äußere Oberfläche einer Membranstützplatte bedeckt, die hohl ausgebildet ist und aus einer Vielzahl von stangenförmigen, steifen Membranstützelementen besteht, die parallel zueinander angeordnet sind. Zu einem Ende dieser Membranstützelemente ist ein kuppelndes Rahmenelement angeordnet, so dass prinzipiell in dieser Filtermembrantasche ebenfalls ein starrer rahmenförmiger Körper angeordnet ist. Ähnliche Lösungen mit starren, rahmenartigen Filtrationskassetten werden auch in der EP 0 602 560 B1 oder der EP 0 510 328 B1 beschrieben. Gleichgültig, ob eine Vollkörperplatte oder ein Rahmenprofil verwendet wird, bleibt jedoch der Nachteil eines lokal unterschiedlichen Strömungswiderstandes, durch den eine gleichmäßige Strömungsverteilung behindert und damit der Reinigungseffekt gehemmt wird. Dieser nachteilige Effekt wird mit zunehmender Einsatzdauer des Filtersystems noch dadurch verstärkt, dass sich in den Randbereichen der Kassetten Partikel ablagern.

Ungünstig ist auch wegen der erforderlichen Platten- oder Rahmendicke die schlechte Raumausnutzung bzw. das schlechte Verhältnis zwischen Filtrationsfläche und genutztem Raum. Insbesondere in Fällen, wo zum Einsatz des Filtersystems nur ein begrenzter Raum zur Verfügung steht, können die relativ großvolumigen Filtrationssysteme nicht oder zumindest nur unzureichend eingesetzt werden.

Bei der beispielsweise in der EP 0 662 341 B1 beschriebenen Lösung muss auch jede einzelne Membranplatte mit einer Flüssigkeitsabsaugeinrichtung versehen werden, die wiederum an einem zentralen Flüssigkeitssammler angeschlossen ist. Dies hat eine Vielzahl von Verbindungsstellen zwischen den Membranplatten und dem Filtratsammler zur Folge, so dass die Gefahr der Entstehung von Leckagestellen stark erhöht ist. Treten Leckagen auf, so führt dies zu einer unerwünschten Verunreinigung des Filtrates.

Das Abstract der JP 06218247 A offenbart eine Membrantrennvorrichtung. Um die Abstände zwischen nebeneinander liegende Membranmodulen konstant zu halten, sind mehrere in Führungsnuten gehaltene Membrane parallel in der Auf- und Abwärtsrichtung in einen bestimmten Intervall in dem Hauptgehäuse angeordnet. Den Abstand der Membrane soll ein vorstehender Teil einer jeden Membran gewährleisten, der an einem vorstehenden Teil der benachbarten Membran anliegt.

Das Abstract der JP 11285689 A schlägt ein Membranelement vor, bei dem Abstandhalter lösbar am oberen und am unteren Ende eines Rahmenkörpers eines Membranelementes mittels eines Klebstoffes befestigt sind. Hiermit soll der Durchflussquerschnitt in vertikaler Richtung auch dann konstant gehalten werden, wenn das Membranelement durch Biegung deformiert wird.

Die WO 95/06514 offenbart ein Filtrationsmodul mit einem Gehäuse, in dem mehrere flache Filtermembrane parallel nebeneinander angeordnet sind. Stützeinrichtungen in den Strömungskanal sorgen für eine Verstärkung der Membrane, so dass deren Schwingung verhindert und ihre Druckresistenz verbessert wird.

Es ist daher Aufgabe der vorliegenden Erfindung, ein Filtrationsmodul zu schaffen, das eine optimierte Anströmung zur verbesserten Flüssigkeitsreinigung und eine gleichmäßige Differenzdruckverteilung sowie beim Rückspülen einen möglichst geringen Flächendruck auf den Filtermembrantaschen gewährleistet. Das Filtrationsmodul soll vorzugsweise eine konstruktive Einheit mit einem Strömungskanal und einer Anströmeinrichtung bilden, die nicht oder weniger leckagegefährdet ist und deren Aufbau konstruktiv einfach ist.

Diese Aufgabe wird durch das Filtrationsmodul nach Anspruch 1 gelöst. Erfindungsgemäß sind die Filtermembrantaschen an gegenüberliegenden geschlossenen Seitenflächen des Halters, vorzugsweise über ihre gesamte Länge, befestigt. Der Halter weist mindestens eine Absaugleitung zur Abführung der über die Filtermembrantaschenöffnungen abgesaugten Flüssigkeit auf. Die Filtermembrantaschen weisen einen flexiblen, flüssigkeitsdurchlässigen Kern und/oder mehrere flexible flüssigkeitsdurchlässige Kernelemente auf. An oder im Abstand zu jeder Filtrationsmembrantasche sind stab- oder gitterförmige Stützelemente vorgesehen.

Die besonderen Vorteile dieses Filtrationsmoduls liegen in einer vereinfachten Herstellung, die sich insbesondere in geringeren Herstellungskosten ausdrückt, sowie in einer gleichmäßigen Differenzdruckverteilung über die gesamte Filtermembrantasche, die in Folge der fehlenden starren platten- oder rahmenförmigen Elemente auch in weitaus geringerem Maße einer Filtermembranschädigung ausgesetzt sind. Im Gegensatz zu der nach dem Stand der Technik bekannten Lösung mit Filtrationskassetten ist die Absaugleitung bzw. sind die Absaugleitungen auch in einem starren Halter integriert, so dass deren Beschädigungen bzw. hierdurch entstehende Leckagen ausgeschlossen sind. Die flexiblen flüssigkeitsdurchlässigen Kerne oder Kernelemente schaffen einen definierten, stets gleichbleibenden Membrantascheninnenraum. Durch die Stützelemente wird bewirkt, dass die Membrane beim Rückspülen einen möglichst gering gehaltenen Flächendruck erfahren, der auf die Membranoberfläche wirkt, da sich sonst die Membranflächen vom Trägermaterial lösen können. Die Stützelemente schaffen bei der Rückspülung einen Gegendruck auf die Membrantaschen bzw. sorgen dafür, dass die auftretenden Kräfte verteilt werden und damit die Last auf die Membrantasche gering gehalten wird.

Ferner sind mehrere stabförmige Stützelemente vorgesehen, die parallel im Abstand zueinander in Strömungsrichtung der Flüssigkeit durch den Halter angeordnet sind. Hierdurch wird ein geringstmöglicher Strömungswiderstand gewährleistet. Die stabförmigen Stützelemente können im Querschnitt rund, oval oder rechteckig oder eine sonstige Ausführungsform haben, die gewährleistet, dass die Membranoberfläche beim Rückspülen geschont, insbesondere nicht geschädigt wird.

Die Membranfolie besteht aus einem duroplastischen und/oder elastomeren Kunststoff. Vorzugsweise werden als Duroplast Phonalharz und als Elastomer Polyethylen, Polyacrylnitrid, Polyethersulfon und/oder PVC verwendet. Solche Folien besitzen eine hohe mechanische Belastbarkeit. Insbesondere bestand bei den nach dem Stand der Technik verwendeten Membranen die Gefahr, dass in der Flüssigkeit enthaltene scharfkantige Partikel Schäden verursachten, weswegen zum Schutz der nach dem Stand der Technik bekannten Filtrationseinrichtungen aufwendige Vorreinigungen der Flüssigkeit zur Entfernung diese scharfkantigen Partikel erforderlich gewesen sind. Dies kann durch Einsatz der erfindungsgemäß zu verwendenden Folien vermieden werden, die auch bei etwaigen Wartungsarbeiten besser vor Beschädigungen geschützt sind.

Weiterbildungen der Erfindung sind in den Unteransprüchen beschrieben.

Vorzugsweise bestehen die Stützelemente aus einem stabilen (starren) Kunststoff oder einem kunststoffbeschichteten Metall und/oder besitzen - je nach gewählten Querschnittsformen - einen Durchmesser, eine große Längsachse oder eine Kantenlänge von ≤1 mm. Diese Maßnahme gewährleistet, dass ein freier Strömungsdurchfluss zwischen den Membrantaschen möglich ist, damit eine reinigende Überströmung über die Membranoberflächen weiterhin möglich ist. Dies setzt selbstverständlich voraus, dass der Membrantaschenabstand mindestens 1 mm groß ist und 10 mm nicht übersteigt.

Nach einer weiteren Ausgestaltung besteht die Möglichkeit, dass zwischen zwei benachbarten Filtrationsmembrantaschen jeweils nur ein gitterförmiges Stützelement oder nur eine Gruppe von parallel in einer Reihe angeordneten stabförmigen Stützelementen vorgesehen ist. In diesem Fall dienen die Stützelemente beim Rückspülen als Widerlager für zwei Membrantaschenflächen.

Die Stützelemente sind entweder über starre Verbindungsglieder am Halter selbst befestigt oder an den großflächigen gegenüberliegenden Außenseiten der Filtrationsmembrantaschen, wo sie als rippen-, stab- oder netzstrukturförmige Verstärkung angeordnet sind.

Ferner bestehen die Filtermembrantaschen im einfachsten Fall aus zwei ringsum miteinander verbundenen Membranfolien, die vorzugsweise durch Kleben, Schweißen oder durch Vergießen mit einem weiteren Material, das weiterhin vorzugsweise den gegossenen Halter bildet, verbunden sind. Hierdurch können die Filtermembrantaschen leicht und kostengünstig hergestellt werden.

Nach einer weiteren Ausgestaltung der Erfindung besteht der Halter aus einem quaderförmigen Rahmen, der die Filtermembrantaschen umschließt bzw. innerhalb dessen die Filtermembrantaschen parallel beabstandet eingespannt sind. Insbesondere wird ein Halter aus Kunststoff gewählt, vorzugsweise in Form eines gegossenen duroplastischen Kunstharzkörpers, wobei mit dem Gießvorgang zugleich die Verbindung zu den Filtermembrantaschen hergestellt wird. Verwendbare Duroplaste sind insbesondere Polyester mit oder ohne Füllstoffe oder Polyurethan.

Nach einer weiteren Ausgestaltung besitzen alle Filtermembrantaschen einen gemeinsamen Entwässerungssammler.

Als Material für den flexiblen flüssigkeitsdurchlässigen Kern bietet sich ein Stützvlies oder ein Gittergewebe aus Stützgewebe an, Gittergewebematerialien sind vorzugsweise Polypropylen, Polyethylen, ein Gasfasergewebe, PVC oder ein Phenolharzgewebe. Bei schwammartigem Stützvlies als Kernmaterial bieten sich insbesondere Polypropylen, Polyethylen, Polyether PVC (als "nicht gewebte Stoffe") oder ein Glasfasergewebe an. Alternativ oder zusätzlich werden einzelne Kernelemente aus flexiblen flüssigkeitsdurchlässigen Rippen verwendet, die vorzugsweise an der Membranfolieninnenseite befestigt sind oder auf der Membraninnenseite angeordnet sind und ggf. aus dem Membranmaterial selbst bestehen. Diese Rippen sind nach einer weiteren Ausführungsform der Erfindung im Wesentlichen parallel zueinander angeordnet, wobei vorzugsweise die sich gegenüberliegenden Filtermembraninnenflächen jeweils parallele Rippen aufweisen, die kreuzweise zu den Rippen der gegenüberliegenden Seite angeordnet sind. Durch diese Maßnahmen bleibt der Filtermembrantascheninnenraum stets gleich groß, selbst dann, wenn durch ungleichmäßige Strömungsverhältnisse ein Filtermembranflächenstück stärker als benachbarte Flächenstücke belastet wird.

Nach einer weiteren Ausführungsform der Erfindung können die Rippen zur Verstärkung der Verbindung miteinander oder über eine innere Stützschicht haftend verbunden sein. Eine haftende Verbindung kann auch zwischen einem flüssigkeitsdurchlässigen Kern aus einem schwammartigen Stützvlies und einer Membran bestehen. Durch diese Maßnahme ist es möglich, die eingesetzten Filtermembrantaschen durch Umkehrung der Filtratflussrichtung rückzuspülen und eine verbesserte Deckschichtkontrolle zu erzielen. Des Weiteren wird durch ein flächenhaftes Anhaften der Membranfolie an den Rippen oder an einem flüssigkeitsdurchlässigen Kern ein die Membran auf Dauer schädigendes Flattern der Membran verhindert.

Zur Verstärkung der Klebe- bzw. Schweißnaht gegenüber aufsteigenden Strömung besitzt die Membrantasche nach einer weiteren Ausgestaltung der Erfindung Kunststoffeinlegestreifen.

Um zu gewährleisten, dass die Einrichtung zur Schaffung eines Flüssigkeitsstromes stets in Bezug auf die Filtermembrantaschen optimal angeordnet ist, kann der Halter mit einem unterstellten Aufströmkanal verbunden sein, in dem eine strömungserzeugende Einrichtung wie eine Pumpe und/oder Belüftung und/oder mindestens ein strömungslenkender Leitkörper fest installiert angeordnet ist/sind. Diese Leitkörper sorgen dafür, dass der Reinigungsstrom in optimaler Weise auf der Unterseite des Filtrationsmoduls verteilt wird.

Nach einer weiteren Ausgestaltung der Erfindung und zur Erhöhung der Funktionskapazität sind vorzugsweise mehrere, jeweils mit Filtermembrantaschen bestückte Halter übereinander angeordnet.

Nach einer weiteren Ausgestaltung der Erfindung weisen die Filtermembrantaschen an ihren unteren Rändern befestigte Reinigungsfasern auf, die sich in den Halterinnenraum erstrecken. Sofern stabförmige Stützelemente verwendet werden, sind die Reinigungsfasern zwischen zwei benachbarten Stützelementen angeordnet. Vorzugsweise bestehen diese Reinigungsfasern aus Kunststoff und besitzen ein spezifisches Gewicht, das kleiner ist als das spezifische Gewicht der zur reinigenden Flüssigkeit. Weiterhin vorzugsweise sind die Reinigungsfasern elastisch und/oder haben einen Durchmesser, der zwischen 0,5 mm und einer Breite ist, die 10 bis 95 % der Spaltbreite der Filtermembrantasche beträgt. Die genannten Fasern werden durch den Flüssigkeitsstrom, der durch das Modul fließt, auf den Filtrationsmembranen bewegt. Diese ständige Bewegung der Fasern sorgt dafür, dass eine verbesserte mechanische Reinigung der Filtrationsmembran erfolgt. Dies schafft den Vorteil, dass die Intervalle, innerhalb denen die Module chemisch gereinigt werden müssen, wesentlich verlängert werden können. Die bisher nach dem Stand der Technik notwendige häufige Entnahme der Module aus dem Filtrationsbecken ist somit nicht mehr erforderlich. Des Weiteren ist es durch den Einsatz der Fasern möglich, hydraulisch schwächer durchströmte Modulbereiche verstärkt mechanisch zu reinigen und so für einen Erhalt der erforderlichen freien Filtrationsfläche zu sorgen. Durch die verstärkte mechanische Reinigung kann auch die zur Erzeugung des Reinigungsstromes eingetragene Gasmenge gegenüber Ausführungsformen ohne Fasern erheblich reduziert werden. Dies führt zu einer Einsparung an Betriebskosten.

Ausführungsbeispiele der Erfindung, anhand derer weitere Details und Vorteile erörtert werden, sind in den Zeichnungen dargestellt. Es zeigen
- Fig. 1: eine perspektivische Ansicht eines erfindungsgemäßen Filtrationsmoduls,
- Fig. 1a: eine Ausführungsvariante gemäß des Filtrationsmoduls nach Fig. 1 mit Reinigungsfasern,
- Fig. 1b: eine perspektivische Ansicht eines erfindungsgemäßen Filtrationsmodul mit abgenommener Seitenfläche,
- Fig. 2: eine teilgeschnittene Teilansicht des Filtrationsmoduls nach Anspruch 1 und
- Fig. 3 bis 7: jeweils Teilschnittansichten von Filtermembrantaschen in unterschiedlichen Ausführungen.

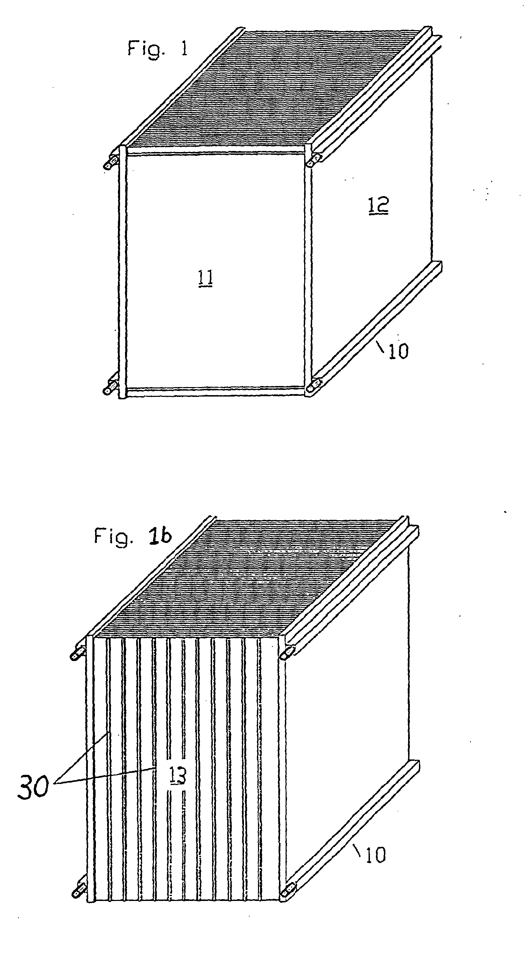

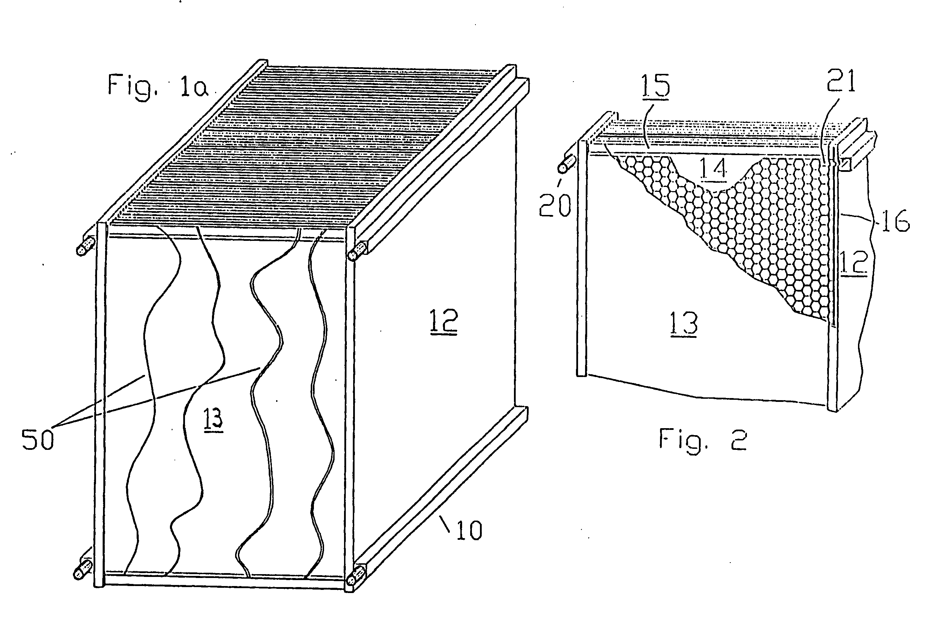

Das in Fig. 1 dargestellte Filtrationsmodul besteht aus einem quaderförmigen Behälter 10 mit geschlossenen Seitenwänden 11, 12. Der Behälter 10 ist oben und unten offen, so dass Flüssigkeit hindurchströmen kann. In dem Behälter und mit diesem Behälter 10 verbunden sind mehrere flache, flexible Filtertaschen nebeneinander und parallel zueinander ausgerichtet angeordnet. Die Filtertaschen besitzen Membranfolien 13 und 14 (siehe Fig. 2), die an ihrem oberen und unteren Ende über eine Schweiß- oder Klebenaht 15 verschlossen sind. Zwischen den Membranfolien 13 und 14 ist ein Stützvties 16 und/oder mehrere flexible Rippen 17, 18 oder 19 angeordnet. Die Filtermembrantaschen sind an ihren jeweiligen, in der Zeichnung vertikal dargestellten Seiten ebenfalls verschlossen und mit der Seitenwand 12 sowie der gegenüberliegenden Seitenwand verbunden. Dies kann beispielsweise dadurch realisiert sein, dass die Seitenränder mit der Seitenwand 12 und der gegenüberliegenden Wand mittels eines Gießverfahrens befestigt sind.

Wie Fig. 1 b prinzipiell zu entnehmen ist, sind an den Membranfolien 13 (und 14) oder im Abstand zu jeder Filtrationsmembranfolie 13, 14 Stützelemente 30 vorgesehen, die hier aus einzelnen im gleichen Abstand in einer Reihe angeordneten Stäben bestehen. Diese Stäbe haben die Aufgabe, beim Rückspülen, bei dem eine Flüssigkeit über die Öffnung 21 in die Membrantasche eingeführt wird, den Flächendruck, der bei starkem Aufwölben auf die Membranoberfläche 13, 14 wirkt, möglichst gering zu halten, womit verhindert wird, dass sich die Membranfläche von dem Kern 16 und/oder dem Kernelement 17, 18 oder 19 löst. Die hier dargestellten stabförmigen Stützelemente dienen somit als Widerlager beim Rückspülen.

Solche Stützelemente sind auf jeder Seite einer Filtrationsmembrantasche angeordnet, und zwar vorzugsweise in einer Richtung, die, entsprechend der Darstellung einen geringstmöglichen Durchflusswiderstand aufweist. Gegebenenfalls und wie im Folgenden beschrieben, sind zwischen den stabförmigen Stützelementen Reinigungsfasern 50 (in Fig. 1 b nicht dargestellt) vorgesehen.

Unter der Voraussetzung, dass der Abstand der einzelnen parallel zueinander angeordneten Filtrationsmembrantaschen zwischen 1 bis 10 mm liegt, sind die Stützelemente 30 im Durchmesser bzw. im maximalen Durchmesser 1 mm dick. Verwendet man zwischen zwei benachbarten Filtrationsmembrantaschen nur ein Stützelement, liegt dies mittig zwischen den Filtrationsmembrantaschen und besitzt vorzugsweise eine dem Abstand der Filtermembrantaschen entsprechende Dicke, wobei diese stabförmigen oder gitterförmigen Stützelemente über Verbindungselemente an dem Halter befestigt sind.

Um ein hinreichend großes Widerlager bieten zu können, sind die Stützelemente zumindest im Wesentlichen starr ausgebildet, so dass sich die Stützelemente nicht oder nur geringfügig durchbiegen können. Die Stabilität bzw. die Biegefestigkeit der Stützelemente richtet sich nach dem aufzuwendenden, auf die Membrantaschen wirkenden Rückspüldruck, dem die Stützelemente standhalten müssen.

Das in Fig. 1a dargestellte Filtrationsmodul entspricht dem vorbeschriebenen Filtrationsmodul (allerdings ohne Darstellung der Stützelemente 30), jedoch sind hier zusätzlich am unteren Rand der Filtermembrantasche Reinigungsfasern 50 befestigt. Diese Reinigungsfasern bestehen aus einem elastischen Kunststoffmaterial, das ein spezifisches Gewicht besitzt, das kleiner als das spezifische Gewicht des zu reinigenden Abwasserstroms ist. Die Reinigungsfasern können im Querschnitt rund, rechteckig, oval oder auch sonstwie geformt sein. Wesentlich ist lediglich, dass die Reinigungsfasern durch den Flüssigkeitsstrom hin und her bewegt werden und hierbei die Filtermembrantaschenflächen reibend berühren. Vorzugsweise beträgt der Mindestfaserdurchmesser bzw. deren Mindestbreite 0,5 mm. Die Obergrenze für die Faserbreite liegt bei 95 % der Spaltbreite der Filtermembrantasche.

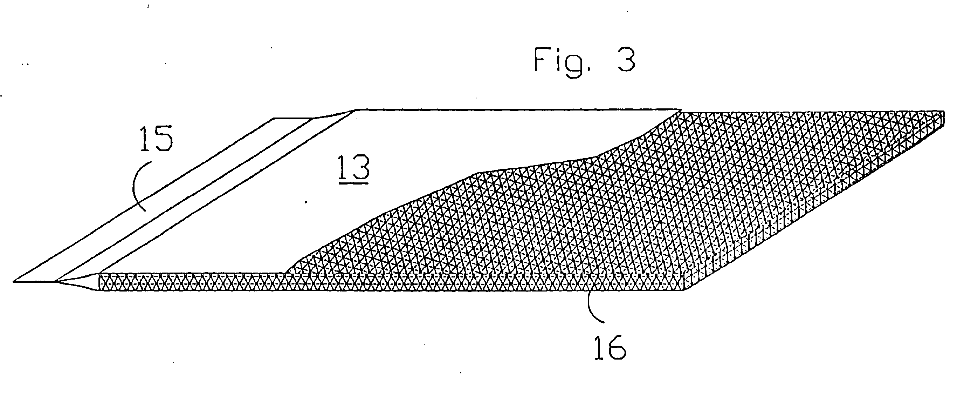

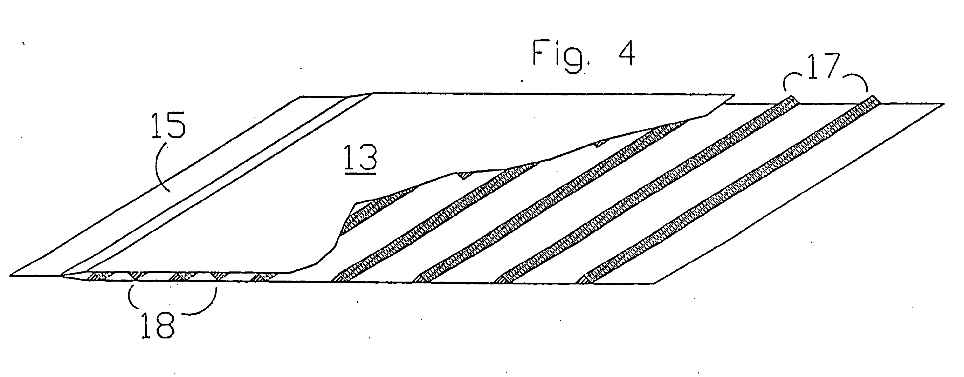

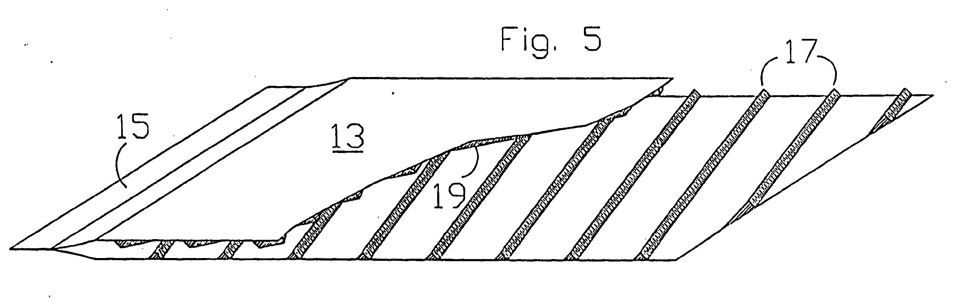

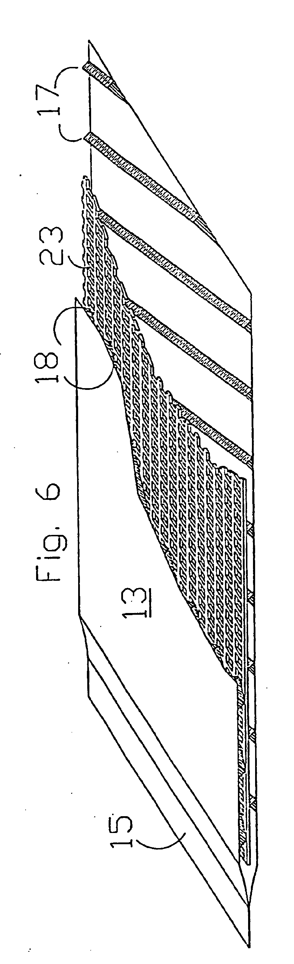

Wie aus Fig. 3, 4 und 5 ersichtlich ist, erstrecken sich der Vliesstützkörper oder die Rippen im wesentlichern über den gesamten Innenhohlraum. Die Anordnung der Rippen 17 und 18 gemäß Fig. 4 ist parallel gewählt, während die Anordnung der Rippen 17 und 19 nach Fig. 5 derart gewählt ist, dass jeweils die Rippen 17 und die Rippen 19 parallel zueinander ausgerichtet sind, wobei jedoch die Rippen 17 und 19 vertikal zueinander stehen. Bei der Ausführungsform nach Fig. 6 befindet sich in der Filtermembrantasche, d.h. zwischen den Membranfolien 13 und 14 sowohl ein Stützvlies 16 als auch Rippen 17 und 18, wobei letztere mit der Membranfolieninnenseite verbunden sind. Die Rippen 17 und 18 stehen jeweils vertikal zueinander.

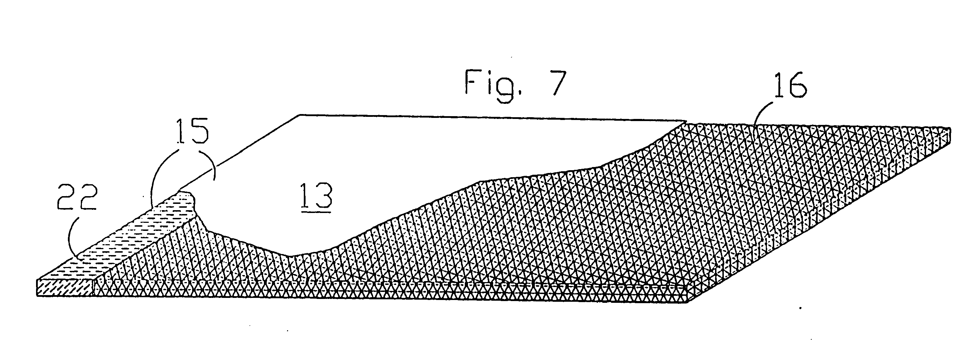

Bei der in Fig. 7 dargestellten Ausführungsform wird die Klebe- bzw. Schweißnaht der Membrantasche durch einen Streifen 22 aus Kunststoff, beispielsweise aus Polyester, Polyurethan, ABS, Polyethylen, Polyphenol oder PVC verstärkt. Der Streifen 22 weist die gleiche oder eine ähnliche Dicke auf wie das eingesetzte Kernmaterial und wird beidseitig mit dem Membranteil verklebt oder verschweißt. Dadurch kann die Membrantasche bei erhöhten Strömungsgeschwindigkeiten diesen noch besser widerstehen. Des weiteren bietet der Einsatz des Streifens 22 noch die Möglichkeit, die Fertigung der Membranmodule weiter zu vereinfachen, da er eine Führung für das Kernmaterial darstellt und beim Vergussvorgang der einzelnen Taschen mit dem Taschenhalter eine formstabilisierende Funktion aufweist.

Von den in Fig. 3 bis 7 dargestellten Filtermembrantaschen sind entsprechend der Größe des Kastens 10 in gewünschter Anzahl parallel zueinander und stets gleichförmig von benachbarten Membrantaschen angeordnet. Jede Membrantasche weist einen flexiblen, flüssigkeitsdurchlässigen Kern bzw. Kernelemente auf, welcher beidseitig von Membranfolien 13 und 14 umgeben ist. Die Membranfolien sind an zwei gegenüberliegenden Seiten miteinander verklebt oder verschweißt, wodurch die Membrantaschendicke bis auf die Dicke der miteinander verklebten bzw. verschweißten Membrane reduziert ist. Hierdurch wird ein Strömungsprofil erreicht, welches zu einer Verringerung des Strömungswiderstandes führt und eine verbesserte Strömung der Filtermembrantaschen gewährleistet. Der flexible, flüssigkeitsdurchlässige Kern und/oder die Kernelemente der Filtermembrantaschen sorgen dafür, dass trotz der Druckdifferenz zwischen der Membranaußen- und der Membraninnenseite während des Filtrationsvorgangs ein filtratgefüllter Raum zwischen den beiden Folien 13 und 14 bestehen bleibt. Dieser Raum dient dem Filtratabtransport. Die verbleibenden zwei Seiten jeder Filtermembrantasche sind durch einen Vergussprozess fest mit dem sie umgebenden Halter verbunden. Der Halter bzw. die sich gegenüberliegenden Wände 12 weisen ferner Saugkanäle 20 zur Entwässerung jeder Filtermembrantasche auf, wozu diese eine Öffnung 21 besitzt. Der Vorteil dieser Ausgestaltung führt dazu, dass zwischen den Filtermembrantaschen und dem Filtratsammler keine separaten Verbindungen hergestellt werden müssen. Die Filtermembrantaschen besitzen ein optimales Filtrationsflächen-/Raum-Verhältnis. Das Filtrationsmodul ist daher auch in Anwendungen mit begrenztem Raumangebot einsetzbar. die mechanische Beständigkeit der Membranfolien wird dadurch gewährleistet, dass z.B. robuste Batterieseparatorfolien für den Filtrationsprozess eingesetzt werden.

Die einfache Filtrationsmodulkonstruktion wird dadurch erreicht, dass die eingesetzten Membranfolien zunächst verklebt und anschließend mit Kunstharz zu einem "Taschen"-Halter vergossen werden. Die Einheit aus Membrantaschen und Taschenhalter bildet ein Filtrationsmodul. Hierdurch kann in einem Fertigungsschritt eine Vielzahl von Filtermembrantaschen zu einem Modul zusammengefasst werden.

Der Halter bildet die äußere Begrenzung des Filtrationsmoduls, so dass ein zusätzlicher separater Membranaufnahmekasten entfällt. Der Halter 10 wird fest mit einem nicht dargestellten Aufströmkanal verbunden, der unterhalb des Taschenhalters angeordnet ist. In diesem Aufströmkanal ist - wie grundsätzlich nach dem Stand der Technik, z.B. aus der EP 0 662 341 B1 bekannt - eine strömungserzeugende Einrichtung wie eine Belüftungseinrichtung oder eine Pumpe enthalten. Hierdurch ist stets eine vollständige, eigenständig funktionelle Einheit geschaffen, die in den flüssigkeitsgefüllten Arbeitstank in Form des Kastens 10 integriert wird. Ein aufwendiges Einführen von Modulen zur Kopplung von Ober- und Unterkasten entfällt.

Prinzipiell können mehrere Filtrationsmodule 10 direkt angeordnet werden, wodurch eine verbesserte Ausnutzung des Einigungsstromes erreicht wird.

Die zur Filtration eingesetzte Batterieseparatorfolie kann an ihrer Innenseite Rippen 17, 18 und 19 besitzen, welche als Distanzstücke zur Offenhaltung des Filtratraumes genutzt werden. die Rippen werden entweder untereinander verklebt, um eine bessere Steifigkeit der Filtertasche zu erreichen oder über ein Stützgewebe in Form eines Stützvlies miteinander verbunden.

## Patentansprüche

1. Modul zur Filtration von flüssigen Medien, insbesondere zur Reinigung von Abwasser mit mehreren, jeweils mindestens eine Öffnung (21) zur Entwässerung ihres Innenraumes aufweisende im wesentlichen flachen und flexiblen Filtrationsmembrantaschen bestehend aus zwei ringsum miteinander verbundenen Membranfolien (13, 14), wobei die Taschen, vertikal, parallel und vorzugsweise in gleichem Abstand zueinander in einem starren zumindest im wesentlichen quaderförmigen Halter so angeordnet sind, dass die zwischen benachbarten Filtermembrantaschen liegenden Zwischenräume von einer Flüssigkeit durchströmbar sind, wobei die Filtermembrantaschen an gegenüberliegenden geschlossenen Seitenflächen (12) des Halters, vorzugsweise über ihre gesamte Länge, befestigt sind und der Halter mindestens eine Absaugleitung (20) zur Abführung der über die Filtermembrantaschenöffnungen (21) abgesaugten Flüssigkeit aufweist,
**dadurch gekennzeichnet,dass**
die Filtermembrantaschen einen flexiblen, flüssigkeitsdurchlässigen Kern (16) und/oder mehrere flexible flüssigkeitsdurchlässige Kernelemente (17, 18, 19) aufweisen und dass an oder im Abstand zu jeder Filtrationsmembrantasche stab- oder gitterförmige Stützelemente vorgesehen sind, die parallel im Abstand zueinander in Strömungsrichtung der Flüssigkeit durch den Halter angeordnet sind und dass die Membranfolien (13, 14) aus einem duroplastischen und/oder elastomeren Kunststoff, vorzugsweise aus einem duroplastischen Phenolharz, Polyethylen, Polyacrylnitrid, Polyethersulfon und/oder Polyvinylchlorid (PVC) bestehen.

2. Filtrationsmodul nach Anspruch 1, **dadurch gekennzeichnet, dass** die stabförmigen Stützelemente im Querschnitt rund, oval oder rechteckig sind, dass die Stützelemente aus einem stabilen Kunststoff oder einem kunststoffbeschichteten Metall bestehen und/oder je nach Querschnittsform einen Durchmesser, eine große Längsachse oder eine Kantenlänge von ≤ 1 mm aufweisen.

3. Filtrationsmodul nach einem der Ansprüche 1 oder 2, **dadurch gekennzeichnet, dass** zwischen benachbarten Filtrationsmembrantaschen jeweils nur ein gitterförmiges Stützelement oder nur eine Gruppe von parallel in einer Reihe angeordneten stabförmigen Stützelementen vorgesehen ist und/oder dass die Stützelemente über starre Verbindungsglieder am Halter befestigt sind.

4. Filtrationsmodul nach einem der Ansprüche 1, **dadurch gekennzeichnet, dass** die Filtrationsmembrantaschen an ihren großflächigen gegenüberliegenden Außenseiten mit Rippen, Stäben oder einer Netzstruktur verstärkt sind.

5. Filtrationsmodul nach eine der Ansprüche 1 bis 4, **dadurch gekennzeichnet, dass** die zwei Membranfolien (13, 14) vorzugsweise durch Kleben, Schweißen oder durch Vergießen mit einem weiteren Material, das weiterhin vorzugsweise den gegossenen Halter bildet, miteinander verbunden sind.

6. Filtrationsmodul nach einem der Ansprüche 1 bis 5, **dadurch gekennzeichnet, dass** der Halter (10) aus Kunststoff besteht, vorzugsweise aus einem gegossenen duroplastischen Kunstharzkörper, insbesondere aus Polyester mit oder ohne Füllstoffe oder Polyurethanen und/oder durch einen gemeinsamen Entwässerungssammler für alle Filtermembrantaschen.

7. Filtrationsmodul nach einem der Ansprüche 1 bis 6, **dadurch gekennzeichnet, dass** der flexible flüssigkeitsdurchlässige Kern ein schwammartiges Stützvlies (16), das vorzugsweise aus Polypropylen, Polyethylen, Polyether, Glasfasergewebe oder PVC besteht oder ein Stützgewebe ist, das vorzugsweise aus Polypropylen, Polyethylen, einem Glasfasergewebe, PVC oder einem Phenolharzgewebe besteht.

8. Filtrationsmodul nach einem der Ansprüche 1 bis 7, **dadurch gekennzeichnet, dass** die einzelnen Kernelemente (17, 18, 19) flexible Rippen sind, die vorzugsweise an der Membranfolieninnenseite befestigt sind oder auf den Membraninnenseiten angeordnet sind und aus dem Membranteil selbst bestehen, wobei die flexiblen Rippen (17, 18, 19) vorzugsweise im Wesentlichen parallel zueinander angeordnet sind und/oder dass die sich gegenüberliegenden Filtermembraninnenflächen jeweils parallele Rippen (17 bzw. 18) aufweisen, die kreuzweise zu den Rippen der gegenüberliegenden Seite angeordnet sind.

9. Filtrationsmodul nach Anspruch 8, **dadurch gekennzeichnet, dass** die Kernelemente (17, 18, 19) untereinander und/oder mit der Membranfolie (13, 14) haftend verbunden sind.

10. Filtrationsmodul nach einem der Ansprüche 7 oder 8, **dadurch gekennzeichnet, dass** entweder das schwammartige Stützvlies (16) oder das Stützvlies (16) mit zusätzlichen Kernelementen (17, 18, 19) mit der Membranfolie (13, 14) haftend verbunden ist.

11. Filtrationsmodul nach einem der Ansprüche 1 bis 10, **dadurch gekennzeichnet, dass** die Filtermembrantasche einen Kunststoffeinlegestreifen zur Verstärkung der Klebe- bzw. der Schweißnaht gegenüber der aufsteigenden Strömung aufweist und/oder dass der Halter (10) mit einem untergestellten Aufströmkanal verbunden ist, in dem eine strömungserzeugende Einrichtung wie eine Pumpe und/oder eine Belüftung und/oder mindestens ein strömungslenkender Leitkörper angeordnet ist/sind.

12. Filtrationsmodul nach einem der Ansprüche 1 bis 11, **dadurch gekennzeichnet, dass** mehrere, jeweils mit Filtermembrantaschen bestückte Halter (10) übereinander angeordnet sind.

13. Filtrationsmodul nach einem der Ansprüche 1 bis 12, **dadurch gekennzeichnet, dass** die Filtermembrantaschen an ihren unteren Rändern befestigte Reinigungsfasern aufweisen, die sich in den Halterinnenraum erstrecken und die vorzugsweise zwischen stabförmigen Längsstäben angeordnet sind und/oder aus Kunststoff bestehen, vorzugsweise ein spezifisches Gewicht aufweisen, das kleiner ist als das spezifische Gewicht des zu filtrierenden Mediums und/oder dass die Reinigungsfasern elastisch sind und/oder einen Faserdurchmesser haben, der zwischen einer Mindestbreite von 0,5 mm und einer Obergrenze der Faserbreite von 95 % der Spaltbreite der Filtermembrantasche beträgt.

## Claims

1. Module for filtration of liquid media, in particular to purify sewage water with several, mainly flat and flexible filtration membrane pockets which comprise at least one opening (21) for draining its interior, comprised of two membrane foils (13, 14) which are connected with each other in full circumference, where the pockets are arranged vertical, parallel and preferably at the same distance from each other in a rigid, at least essentially cuboid holder so that a liquid can flow through the spaces between neighbouring filter membrane pockets, where the filter membrane pockets are fastened on opposing closed lateral surfaces (12) of the holder, preferably across their full length, and that the holder comprises at least one suction pipe (20) to transport off the liquid suctioned off via the filter membrane pocket opening (21),
**characterised in that**
the filter membrane pockets comprise a flexible, liquid-permeable core (16) and/or several flexible liquid-permeable core elements (17, 18, 19) and that rod or grid-shaped support elements are provided on or at a distance to each filtration membrane pocket, which are arranged in parallel at a distance to each other in the direction of flow of the liquid through the holder, and that the membrane foils (13,14) are comprised of a duroplastic and/or elastomeric plastic, preferably of a duroplastic phenolic resin, polyethylene, polyacrylnitride, polyethersulphon and/or polyvinylchloride (PVC).

2. Filtration module as claimed in claim 1, **characterised in that** the rod shape supporting elements are round, oval or rectangular in their cross-section, that the supporting elements are comprised of a stable plastic or a plastic coated metal and/or, depending on the shape of the cross-section, comprise a diameter, a large longitudinal axis or an edge length of ≤ 1 mm.

3. Filtration module as claimed in any one of the claims 1 or 2, **characterised in that** only one grid shaped supporting element or only one group of rod-shaped supporting elements arranged in one row are provided between neighbouring filtration membrane pockets and/or that the supporting elements are fastened to the holder by means of rigid connection elements.

4. Filtration module s claimed in any one of the claims 1, **characterised in that** the filtration membrane pockets are strengthened with ribs, rods or a network structure on their large-surface opposing outer sides.

5. Filtration module as claimed in any one of the claims 1 to 4, **characterised in that** the two membrane foils (13, 14) are combined with each other preferably by gluing, welding or by casting with another material which furthermore preferably also forms the cast holder.

6. Filtration module as claimed in any one of the claims 1 to 5, **characterised in that** the holder (10) is comprised of plastic, preferably from a cast duroplastic synthetic resin body, in particular of polyester with or without filling material or polyurethanes and/or by a joint drains collector for all filter membrane pockets.

7. Filtration module as claimed in any one of the claims 1 to 6, **characterised in that** the flexible, liquid-permeable core is comprised of a spongiform supporting fleece (16), which is preferably comprised of polypropylene, polyethylene, polyether, fibreglass fabric or PVC or is a supporting fabric which is comprised preferably of polypropylene, polyethylene, a fibreglass fabric, PVC or a phenol resin fabric.

8. Filtration module as claimed in any one of the claims 1 to 7, **characterised in that** the individual core elements (17, 18, 19) are flexible ribs, which are preferably fastened to the inner side of the membrane foil or are arranged on the inner side of the membrane foil and are comprised of the membrane part itself, where the flexible ribs (17, 18, 19) are preferably essentially arranged in parallel with each other and/or that the opposing inner surfaces of the filter membrane each comprise parallel ribs (17 resp. 18), which are arranged cross-wise to the ribs of the opposing side.

9. Filtration module as claimed in claim 8, **characterised in that** the core elements (17, 18, 19) are combined adhesively amongst each other and/or with the membrane foil (13, 14).

10. Filtration module as claimed in any one of the claims 7 or 8, **characterised in that** either the spongiform supporting fleece (16) or the supporting fleece (16) with additional core elements (17,18,.19) is combined adhesively with the membrane foil (13, 14).

11. Filtration module as claimed in any one of the claims 1 to 10, **characterised in that** the filter membrane pocket comprises a plastic insert strip to strengthen the adhesive resp. the welding seam against the rising current and/or that the holder (10) is connected with an underlying up-current channel, in which a current generating device such as a pump and/or a fan and/or at least one current-steering guiding body is /are arranged.

12. Filtration module as claimed in any one of the claims 1 to 11, **characterised in that** several holders (10) each equipped with filter membrane pockets are arranged on top of each other.

13. Filtration module as claimed in any one of the claims 1 to 12, **characterised in that** the filter membrane pockets comprise attached cleaning fibres on their lower edges, which extend into the holder interior and which are preferably arranged between rod-shaped longitudinal rods and/or are comprised of plastic, preferably have a specific weight which is smaller than the specific weight of the medium to be filtered and/or that the cleaning fibres are elastic and/or have a fibre diameter which lies between a minimum width of 0.5 mm and an upper limit of fibre width of 95% of the gap width of the filter membrane pocket.

## Revendications

1. Module de filtration de milieux liquides, en particulier pour l'épuration des eaux d'égout, avec plusieurs poches de membrane de filtration pour l'essentiel plates et flexibles présentant au moins une ouverture (21) pour évacuer l'eau de leur intérieur et se composant de deux feuilles de membrane (13, 14) reliées entre elles tout autour, lesdites poches étant disposées verticalement, parallèlement et, de préférence, à distance égale l'une par rapport à l'autre dans un support rigide au moins pour l'essentiel en forme de parallélépipède rectangle, de manière que les intervalles situés entre des poches adjacentes de membrane filtrante puissent être traversés par un liquide, lesdites poches de membrane filtrante étant fixées, de préférence sur toute leur longueur, sur des faces latérales opposées fermées (12) du support et ledit support présentant au moins une conduite d'aspiration (20) destinée à l'évacuation du liquide aspiré par les ouvertures (21) des poches de membrane filtrante,
**caractérisé par le fait que**
les poches de membrane filtrante présentent un noyau (16) flexible perméable au liquide et/ou plusieurs éléments de noyau (17, 18, 19) flexibles perméables au liquide, et que des éléments d'appui en forme de barre ou en treillis sont prévus sur chaque poche de membrane de filtration ou à distance de celle-ci, qui sont disposés parallèlement à distance les uns des autres dans le sens d'écoulement du liquide à travers le support, et que les feuilles de membrane (13, 14) sont réalisées dans une matière plastique thermodurcissable et/ou dans une matière plastique élastomère, de préférence en une résine phénolique thermodurcissable, en polyéthylène, en polyacrylonitrile, en polyéther-sulfone et/ou en polychlorure de vinyle (PVC).

2. Module de filtration selon la revendication 1, **caractérisé par le fait que** lesdits éléments d'appui en forme de barre sont ronds, ovales ou rectangulaires en coupe transversale, que les éléments d'appui sont réalisés en une matière plastique stable ou en un métal revêtu de matière plastique et/ou présentent, selon la forme en coupe transversale, un diamètre, un grand axe longitudinal ou une longueur d'arête de ≤ 1 mm.

3. Module de filtration selon l'une des revendications 1 ou 2, **caractérisé par le fait que** respectivement un seul élément d'appui en treillis ou un seul groupe d'éléments d'appui en forme de barre disposés parallèlement à la ligne est prévu entre des poches voisines de membrane de filtration, et/ou que les éléments d'appui sont fixés sur le support par le biais d'éléments rigides de jonction.

4. Module de filtration selon l'une des revendications 1 à 3, **caractérisé par le fait que**, sur leurs faces extérieures opposées à grande surface, les poches de membrane de filtration sont renforcées par des nervures, des barres ou une structure en réseau.

5. Module de filtration selon l'une des revendications 1 à 4, **caractérisé par le fait que** les deux feuilles de membrane (13, 14) sont reliées l'une à l'autre de préférence par collage, par soudage ou par coulée avec une autre matière qui, en outre de préférence, forme le support coulé.

6. Module de filtration selon l'une des revendications 1 à 5, **caractérisé par le fait que** ledit support (10) est réalisé en matière plastique, de préférence en un corps coulé de résine synthétique thermodurcissable, en particulier de polyester avec ou exempt de matières de remplissage ou de polyuréthanes, et/ou par un collecteur commun d'évacuation des eaux pour toutes les poches de membrane filtrante.

7. Module de filtration selon l'une des revendications 1 à 6, **caractérisé par le fait que** le noyau flexible perméable au liquide est un non-tissé d'appui (16) spongieux qui, de préférence, se compose de polypropylène, de polyéthylène, de polyéther, de tissu de fils de verre ou de PVC, ou est un tissu support qui, de préférence, se compose de polypropylène, de polyéthylène, d'un tissu de fils de verre, de PVC ou d'un tissu de résine phénolique.

8. Module de filtration selon l'une des revendications 1 à 7, **caractérisé par le fait que** les éléments individuels de noyau (17, 18, 19) sont des nervures flexibles qui, de préférence, sont fixées sur la face interne de la feuille de membrane ou sont disposées sur les faces internes de la membrane et se composent de la partie même de la membrane, lesdites nervures flexibles (17, 18, 19) étant disposées de préférence pour l'essentiel parallèlement l'une à l'autre, et/ou que les surfaces intérieures de la membrane filtrante placées en vis-à-vis présentent respectivement des nervures parallèles (17 ou bien 18) qui sont disposées en croix par rapport aux nervures du côté opposé.

9. Module de filtration selon la revendication 8, **caractérisé par le fait que** les éléments de noyau (17, 18, 19) sont reliés de manière adhésive entre eux et/ou à la feuille de membrane (13, 14).

10. Module de filtration selon l'une des revendications 7 ou 8, **caractérisé par le fait que** soit le non-tissé d'appui (16) spongieux soit le non-tissé d'appui (16) avec des éléments supplémentaires de noyau (17, 18, 19) est relié de manière adhésive à la feuille de membrane (13, 14).

11. Module de filtration selon l'une des revendications 1 à 10, **caractérisé par le fait que** la poche de membrane filtrante présente une bande d'insertion en matière plastique pour renforcer la couture collée ou bien la soudure par rapport au courant ascendant, et/ou que ledit support (10) est relié à un canal à courant ascendant disposé là-dessous dans lequel est/sont disposé(s) un dispositif générateur de courant tel qu'une pompe et/ou un dispositif d'aération et/ou au moins un corps de guidage guidant le courant.

12. Module de filtration selon l'une des revendications 1 à 11, **caractérisé par le fait que** plusieurs supports (10) équipés respectivement de poches de membrane filtrante sont disposés l'un au-dessus de l'autre.

13. Module de filtration selon l'une des revendications 1 à 12, **caractérisé par le fait que** les poches de membrane filtrante présentent des fibres de nettoyage qui sont fixées sur leurs bords inférieurs et qui s'étendent dans l'intérieur du support et qui, de préférence, sont disposées entre des barres longitudinales et/ou se composent de matière plastique, présentent de préférence un poids spécifique qui est inférieur au poids spécifique du milieu à filtrer, et/ou que lesdites fibres de nettoyage sont élastiques et/ou présentent un diamètre de fibre qui est compris entre une largeur minimale de 0,5 mm et une limite supérieure de la largeur de fibre de 95 % de la largeur de fente de la poche de membrane filtrante.
